# DEMANDE DE BREVET EUROPEEN

(11) **EP 2 221 494 A1**
(43) Date de publication de la demande: **25.08.2010**
(21) Numéro de dépôt: 10151996.5
(22) Date de dépôt: 28.01.2010
(51) Int. Cl.: F16C 35/067, B60K 17/24

(54) **Dispositif de fixation d'un palier radial d'un arbre de transmission d'un véhicule**

(30) Priorité: 17.02.2009 FR 0951010
(71) Demandeur: Peugeot Citroën Automobiles SA, 78140 Vélizy-Villacoublay (FR)
(72) Inventeur: Bourdin, Loïc, 95870, BEZONS (FR)

(57) **Abrégé**

La présente invention concerne un dispositif de fixation d'un palier radial d'un arbre de transmission d'un véhicule.

Selon l'invention, le dispositif est **caractérisé en ce qu**'il comprend au moins deux taquets (11) montés à rotation au support de palier (3) et pouvant occuper une position faisant saillie radialement dans l'ouverture d'introduction du palier (1) dans le siège de palier (4) de façon à être en appui sur la bague extérieure (7) du palier (1) à l'opposé de l'épaulement radialement interne (8) pour constituer chacun une butée de maintien axial du palier (1) dans son siège (4).

L'invention trouve application dans le domaine de l'automobile.

## Description

La présente invention concerne un dispositif de fixation d'un palier radial d'un arbre de transmission notamment d'un véhicule, tel qu'un véhicule automobile.

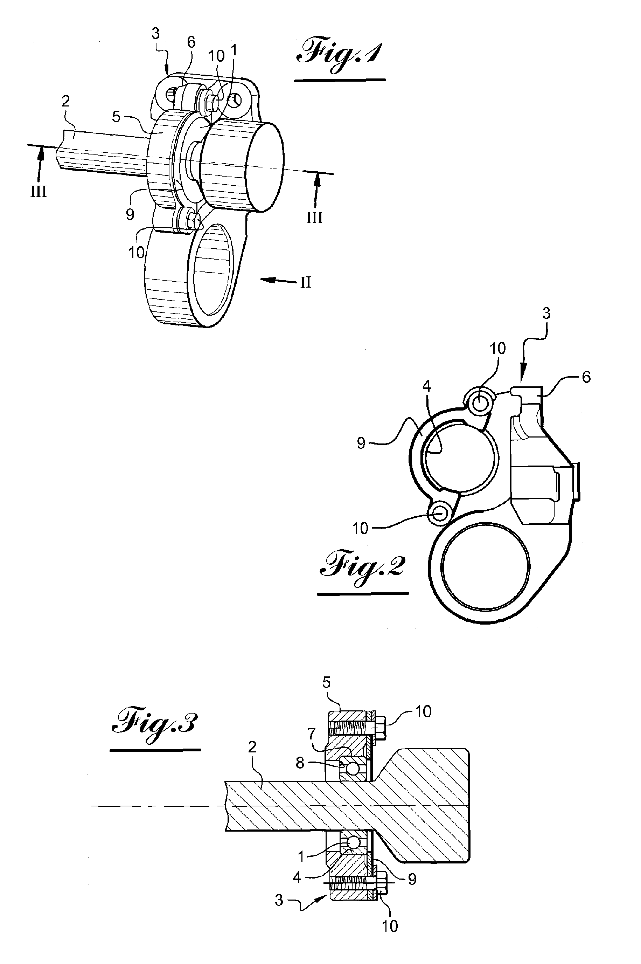

Les figures 1 à 3 représentent un dispositif connu permettant de fixer un palier radial 1 d'un arbre de transmission 2 dans un support de palier 3 comportant un siège de palier 4 apte à recevoir le palier 1.

Le support de palier 3 comprend une patte ou plaque rigide 5 dans laquelle est formé le siège de palier 4 et une bride 6 solidaire de la plaque 5 perpendiculairement à cette dernière et permettant de fixer le support de palier 3 à une partie fixe, telle que la partie inférieure du carter d'un moteur thermique d'un véhicule équipé de l'arbre de transmission 2 pouvant être constitué par un demi-arbre reliant la boîte de transmission du moteur à une roue avant motrice du véhicule.

Le palier 1 peut être constitué par un roulement à billes ou un roulement à aiguilles. Ce palier est maintenu axialement dans le siège 4 de la plaque de support 5 par sa bague extérieure 7 dont un côté est en butée sur un épaulement radialement interne 8 formant fond du siège de palier 4 par une plaque plane relativement mince 9 en forme de segment semi-circulaire. La plaque 9 est fixée, par l'intermédiaire de deux vis de fixation 10, sur une face plane correspondante de la plaque de support 5 de manière qu'une partie du bord interne arquée de la plaque 9 fasse saillie dans la portion d'ouverture correspondante d'introduction du palier 1 dans son siège 4 et soit en appui sur le côté de la bague extérieure 7 du palier 1 à l'opposé de l'épaulement radialement interne 8.

Ce dispositif de fixation connu oblige un monteur à effectuer un nombre d'opérations importantes pour assurer le montage du palier radial 1 de l'arbre de transmission 2 dans le support de palier 3.

En effet, le monteur doit tout d'abord positionner la plaque semi-circulaire 9 sur le support du palier 3 à l'aide des vis 10 en laissant la plaque semi-circulaire 9 suffisamment dégagée de la face plane correspondante de la plaque de support 5 sur laquelle le plaque 9 doit venir en appui afin de permettre l'introduction du palier 1 dans le siège 4. Le monteur saisit alors l'arbre de transmission 2 pour l'introduire au travers de la plaque de support 5 et introduire le palier 1 jusqu'à ce qu'il vienne en appui sur l'épaulement 8. Ensuite, le monteur amène la plaque semi-circulaire 9 en appui sur sa face d'appui correspondante de la plaque de support 5 et visse à l'aide d'une visseuse les vis 10 afin de fixer la plaque semi-circulaire 9 à la plaque de support 5 et serrer le palier 1 dans le siège 4 du support de palier 3.

Le document FR-A-2 876 759 décrit également un dispositif permettant de fixer un palier radial d'un arbre de transmission d'un véhicule dans un siège de palier correspondant d'un support de palier.

Ce dispositif connu utilise un collier de fixation du palier et qui est monté pivotant à l'une de ses extrémités au support de palier et fixé à son extrémité opposée au support de palier par une vis de fixation.

Ce dispositif connu nécessite l'utilisation d'un outil, tel qu'une visseuse, pour fixer le collier de serrage du palier au support de palier.

En outre, les dispositifs ci-dessus connus de l'art antérieur nécessitent des outils non seulement pour le montage de paliers radiaux sur une ligne d'assemblage de véhicules, mais également lors des opérations de démontage et de remontage en après-vente de tels paliers.

La présente invention a pour but d'éliminer les inconvénients ci-dessus des dispositifs connus en proposant un dispositif permettant de fixer un palier radial d'un arbre de transmission sans utiliser d'outil particulier, aussi bien sur une ligne d'assemblage de véhicules qu'en service après-vente.

A cet effet, selon l'invention, le dispositif de fixation d'un palier radial d'un arbre de transmission dans un support de palier comportant un siège de palier apte à recevoir le palier dont la bague extérieure peut venir axialement en butée sur un épaulement radialement interne du siège de palier, est **caractérisé en ce qu**'il comprend au moins deux taquets montés à rotation au support de palier et pouvant occuper une position faisant saillie radialement dans l'ouverture d'introduction du palier dans le siège de palier de façon à être en appui sur la bague extérieure du palier à l'opposé de l'épaulement radialement interne pour constituer chacun une butée de maintien axial du palier dans son siège.

De préférence, chaque taquet est monté à rotation relativement au support de palier à l'encontre de la force de rappel d'au moins un organe élastique rappelant le taquet à sa position en saillie dans l'ouverture d'introduction du palier.

Avantageusement, chaque taquet est monté à rotation sur une entretoise fixée au support de palier par une vis de fixation et en ce que l'organe élastique de rappel est logé dans le taquet en étant interposé entre ce dernier et l'entretoise.

De préférence, l'organe élastique est un ressort hélicoïdal monté arqué dans le taquet correspondant coaxialement à l'entretoise.

Les deux taquets sont diamétralement opposés et chaque taquet présente une forme générale tronconique oblongue et comporte deux oreilles externes de préhension.

Selon une variante de réalisation, une rondelle élastique est interposée entre l'épaulement radialement interne et la bague extérieure du palier de manière à plaquer axialement le palier contre les deux taquets rotatifs.

Avantageusement, le support de palier comprend une plaque rigide comportant le siège de réception du palier radial solidaire de l'arbre de transmission qui traverse la plaque de support perpendiculairement à celle-ci.

La plaque rigide est solidaire d'une bride de fixation de la plaque à une partie de support.

Le palier radial est un roulement à billes ou à aiguilles.

Selon une application particulière, l'arbre de transmission équipe un véhicule tel qu'un véhicule automobile.

Dans cette application particulière, le support de palier est fixé en partie inférieure du moteur du véhicule.

L'invention vise également un support de palier radial d'un arbre de transmission comportant un siège de palier apte à recevoir le palier et qui est **caractérisé en ce qu**'il comprend au moins deux taquets montés à rotation au support de palier et pouvant occuper une position faisant radialement saillie dans l'ouverture d'introduction du palier dans le siège de palier.

De préférence, chaque taquet est monté à rotation relativement au support de palier à l'encontre de la force de rappel d'au moins un organe élastique, tel qu'un ressort hélicoïdal, rappelant le taquet à sa position en saillie dans l'ouverture d'introduction du palier.

Avantageusement, chaque taquet est monté à rotation sur une entretoise fixée au support de palier par une vis de fixation et en ce que l'organe élastique de rappel est logé dans le taquet en étant interposé entre ce dernier et l'entretoise.

Les deux taquets sont diamétralement opposés.

L'invention vise également un procédé de montage d'un palier radial d'un arbre de transmission dans un support de palier, le procédé utilisant le dispositif tel que défini précédemment, et qui est **caractérisé en ce qu**'il consiste à écarter manuellement chaque taquet de sa position radialement en saillie dans l'ouverture d'introduction du palier dans le siège de palier et maintenir manuellement les taquets à leur position écartée, introduire axialement l'arbre de transmission pourvu du palier radial au travers du siège de palier, introduire le palier dans son siège jusqu'à amener la bague extérieure du palier en position de butée sur l'épaulement radialement interne, et relâcher les taquets qui sont rappelés élastiquement à leur position en saillie de maintien de la bague extérieure du palier dans son siège.

Ce procédé est utilisé sur une ligne d'assemblage d'un véhicule notamment automobile pour monter le palier radial d'un arbre de transmission du véhicule dans un support de palier solidaire d'une partie inférieure du moteur du véhicule.

L'invention vise enfin un véhicule notamment automobile, **caractérisé en ce qu**'il est équipé d'au moins un dispositif de fixation tel que défini précédemment.

L'invention sera mieux comprise, et d'autres buts, caractéristiques, détails et avantages de celle-ci apparaîtront plus clairement dans la description explicative qui va suivre faite en référence aux dessins annexés donnés uniquement à titre d'exemple illustrant un mode de réalisation de l'invention et dans lesquels :
- la figure 1 est une vue en perspective d'un dispositif de fixation d'un palier radial d'un arbre de transmission d'un véhicule conforme à l'art antérieur ;
- la figure 2 est une vue de côté suivant la flèche II de la figure 1 sans l'arbre de transmission ;
- la figure 3 est une vue en coupe dans un plan vertical contenant la ligne III-III de la figure 1 ;
- la figure 4 est une vue en perspective d'un support de palier d'un arbre de transmission conforme à l'invention ;
- la figure 5 est une vue en perspective semblable à celle de la figure 4 sans l'arbre de transmission ;
- la figure 6 est une vue de côté suivant la flèche VI de la figure 5 ;
- la figure 7 est une vue partielle agrandie en coupe suivant la ligne VII-VII de la figure 4 ;
- la figure 8 est une vue en perspective d'un ensemble formant taquet de l'invention ;
- la figure 9 est une vue éclatée de l'ensemble formant taquet de la figure 8 ; et
- la figure 10 est une vue en coupe d'un taquet de l'invention dans un plan contenant la ligne X-X de la figure 8 et perpendiculaire à la vis de fixation du taquet au support de palier.

Le dispositif de l'invention va être décrit dans l'application à un arbre de transmission d'un véhicule, tel que par exemple un demi-arbre reliant la boîte de transmission du moteur thermique du véhicule à l'une de ses roues avant motrices, le demi-arbre étant reçu dans un palier radial d'un support de palier fixé à un boîtier ou carter du moteur en partie inférieure de celui-ci.

Cependant, l'invention peut s'appliquer à la fixation d'un palier radial de tout autre arbre de transmission que celui d'un véhicule.

Les différents éléments et composants du dispositif de l'invention identiques à ceux du dispositif de fixation connu des figures 1 à 3 portent les mêmes références.

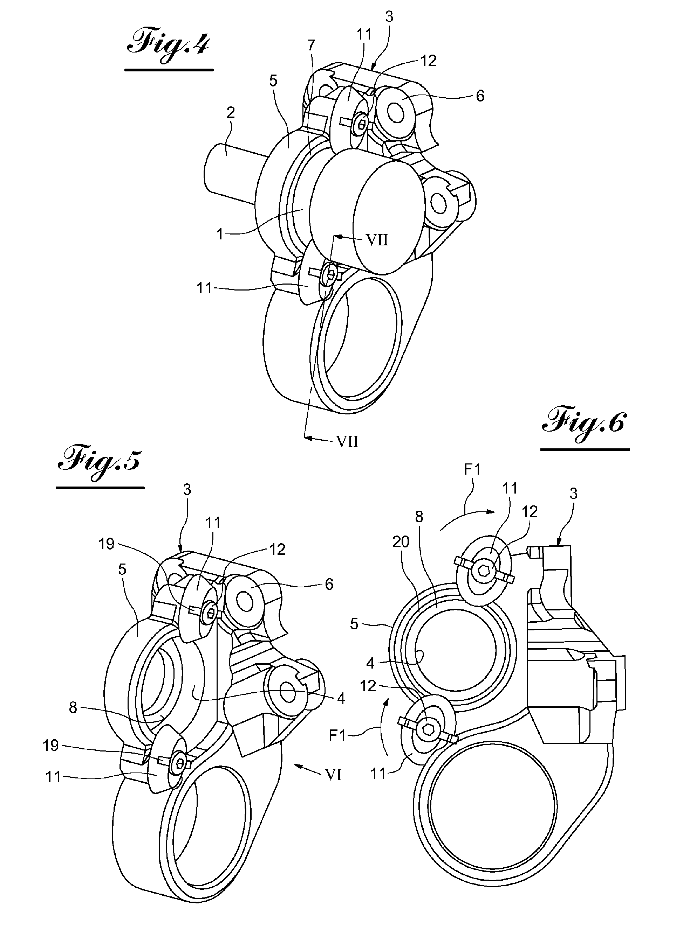

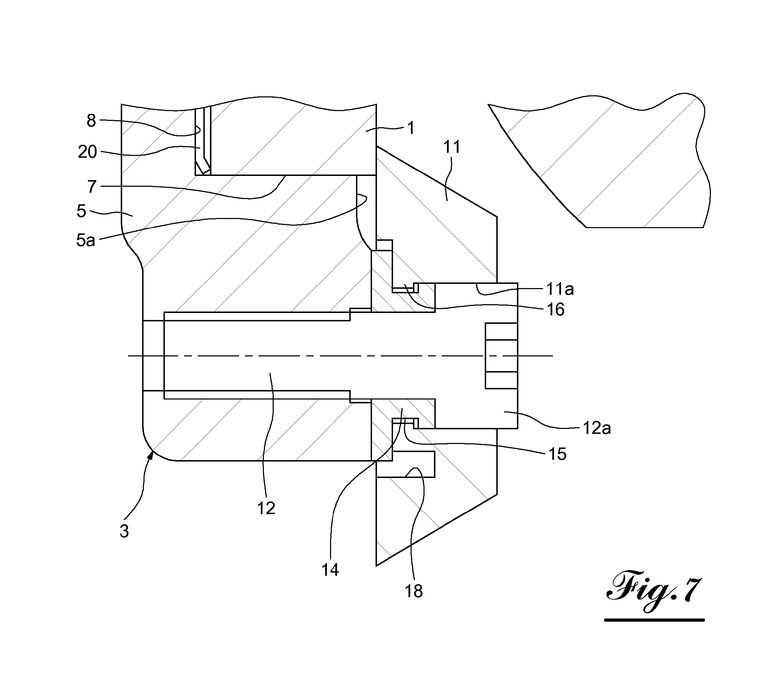

En se reportant aux figures 4 à 10, le dispositif de l'invention permettant de fixer un palier radial 1 d'un arbre de transmission 2 dans un support de palier 3 comprend au moins deux taquets 11 solidaires d'un côté de la plaque rigide 5 du support de palier 3 par l'intermédiaire respectivement de deux vis de fixation 12 ancrées dans la paroi 5 du support de palier 3.

Les deux taquets 11 sont montés diamétralement opposés au siège circulaire de palier 4 en étant dirigés l'un vers l'autre de manière à normalement faire saillie radialement et intérieurement du bord circulaire délimitant l'ouverture d'introduction du palier 1 dans son siège 4.

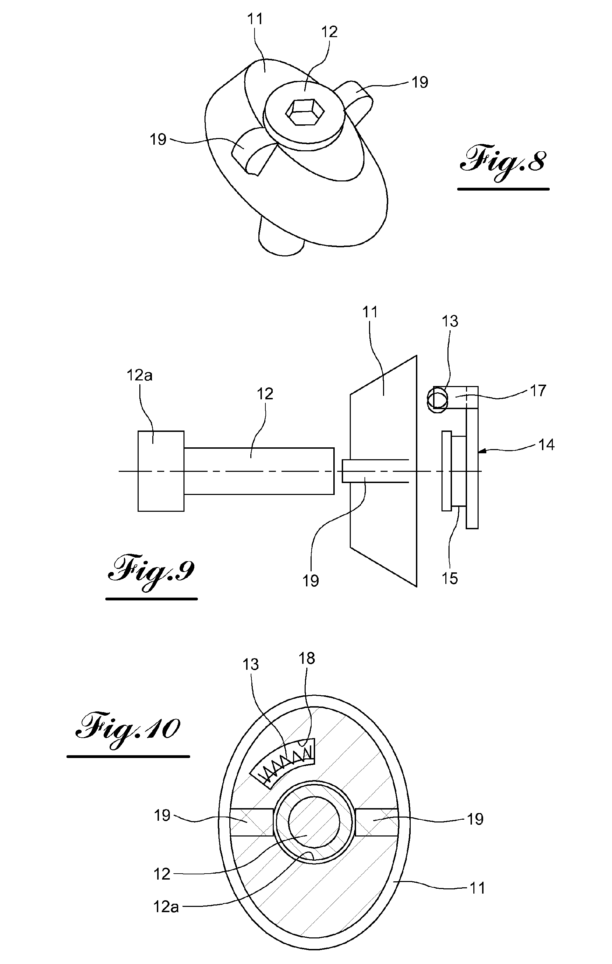

A cet effet, chaque taquet 11 est monté à rotation relativement au support de palier 3 à l'encontre de la force de rappel d'au moins un organe élastique 13, tel qu'un ressort hélicoïdal de compression, rappelant le taquet 11 à sa position faisant saillie intérieurement dans l'ouverture d'introduction du palier 1 dans son siège 4. Plus précisément, chaque taquet 11 est monté à rotation sur une entretoise 14 coaxialement à cette dernière, laquelle entretoise est fixée à la plaque rigide 5 du support de palier 3 par la vis de fixation 12 traversant coaxialement l'entretoise 14. Cette dernière présente une forme générale cylindrique comportant une gorge centrale 15 dans laquelle est montée à rotation une paroi annulaire radialement interne 16 du taquet 11. L'entretoise 14 comporte une patte de butée 17 parallèle à l'axe de révolution de l'entretoise et disposée dans une rainure arquée interne 18 du taquet 11 de façon que ce dernier puisse tourner relativement à l'entretoise 17 sur un secteur limité. Le ressort de rappel 13 est logé dans la rainure arquée concentriquement à l'axe de révolution de l'entretoise 14 en étant interposé entre la patte de butée 17 et le fond correspondant de la rainure arquée du taquet 11. De la sorte, en position détendue représentée en figure 10, le ressort 13 maintient le taquet correspondant 11 à sa position en saillie dans le bord délimitant l'ouverture d'introduction du palier 1 dans son siège 4 et pour dégager le taquet 11 hors de cette ouverture, il suffit de tourner manuellement d'environ un quart de tour le taquet 11 dans le sens indiqué par la flèche F1 en figure 6 à l'encontre de la force de rappel exercée par le ressort 13.

La tête 12a de chaque vis de fixation 12 est partiellement noyée dans un lamage 11a du taquet correspondant 11.

Chaque taquet rotatif 11 présente une forme générale oblongue tronconique et est pourvu de deux oreilles externes opposées 19 permettant de saisir manuellement le taquet pour le faire pivoter d'environ un quart de tour à sa position dégagée de l'ouverture d'introduction du palier 1 dans son siège 4.

En position montée du palier 1 dans son siège 4, la bague extérieure 7 du palier 1 est en appui d'un côté sur l'épaulement radialement interne 8 et du côté opposé sur les extrémités en saillie des deux taquets 11 de manière à maintenir axialement le palier 1 dans son siège 4. La bague externe 7 du palier 1 est montée à ajustement glissant dans son siège de palier 4 et la face de la paroi 5 située en regard des taquets 11 comporte un dégagement 5a permettant au côté de la bague externe 7 du palier 1 opposé à l'épaulement 8 de venir en appui sur la face interne correspondante de chaque taquet 11.

Une rondelle élastique 20 peut être interposée entre l'épaulement radialement interne 8 et la bague externe 7 du palier 1 de manière à plaquer axialement la bague externe 7 en appui sur les extrémités correspondantes en saillie des deux taquets 11. Une telle rondelle peut être constituée par une rondelle du type Belleville ou tout simplement par une rondelle annulaire en un matériau élastomère.

Le procédé de montage du palier 1 de l'arbre de transmission 2 ressort déjà en partie de la description qui précède et va être maintenant expliqué dans le cadre d'un montage en ligne de pièces de véhicules automobiles.

Un opérateur saisit l'arbre de transmission 2 pourvu de son palier 1, tel qu'un roulement à billes ou un roulement à aiguilles, et introduit axialement et perpendiculairement l'arbre au travers du siège de palier 4 de la paroi 5 du support 3 préalablement fixé par sa bride 6 au carter correspondant du moteur thermique d'un véhicule.

Lorsque le palier 1 se présente en regard des deux taquets 11, l'opérateur saisit manuellement chaque taquet 11 par ses deux oreilles 19 pour le faire pivoter suivant le sens de la flèche F1 à l'encontre de la force de rappel du ressort 13 afin de le dégager de l'ouverture d'introduction du palier 1 dans le siège 4. L'opérateur peut alors introduire le palier 1 dans son siège 4 jusqu'à ce qu'il vienne en appui sur l'épaulement 8 et chaque taquet 11 peut être relâché pour être amené par le ressort de rappel 13 en regard du côté correspondant de la bague extérieure 7 du palier 1 qui se trouve ainsi bloqué axialement dans son siège 4.

Le dispositif de l'invention permet donc un montage rapide d'un palier radial d'un arbre de transmission dans son support de palier correspondant en manipulant seulement les deux taquets et l'ensemble à arbre de transmission et palier radial, contrairement aux dispositifs antérieurement connus nécessitant plusieurs manipulations de la part de l'opérateur de plusieurs pièces et impliquant surtout l'usage d'une visseuse pour le blocage du palier radial dans son siège correspondant.

Le dispositif de l'invention assure une simplification du montage d'arbres de transmission en bord de ligne de montage de véhicules automobiles et diminue considérablement les coûts de production par rapport aux dispositifs connus antérieurement. Enfin, le démontage de l'arbre de transmission et de son palier radiale, pour effectuer une réparation en après-vente, est également très simple puisqu'il nécessite seulement de saisir l'arbre de transmission et de le retirer du support de palier après avoir écarté par pivotement les deux taquets de leur position de maintien du palier.

## Revendications

1. Dispositif de fixation d'un palier radial (1) d'un arbre de transmission (2) dans un support de palier (3) comportant un siège de palier (4) apte à recevoir le palier (1) dont la bague extérieure (7) peut venir axialement en butée sur un épaulement radialement interne (8) du siège de palier (4), **caractérisé en ce qu'**il comprend au moins deux taquets (11) montés à rotation au support de palier (3) et pouvant occuper une position faisant saillie radialement dans l'ouverture d'introduction du palier (1) dans le siège de palier (4) de façon à être en appui sur la bague extérieure (7) du palier (1) à l'opposé de l'épaulement radialement interne (8) pour constituer chacun une butée de maintien axial du palier (1) dans son siège (4).

2. Dispositif selon la revendication 1, **caractérisé en ce que** chaque taquet (11) est monté à rotation relativement au support de palier (3) à l'encontre de la force de rappel d'au moins un organe élastique (13) rappelant le taquet (11) à sa position en saillie dans l'ouverture d'introduction du palier (1).

3. Dispositif selon la revendication 2, **caractérisé en ce que** chaque taquet (11) est monté à rotation sur une entretoise (14) fixée au support de palier (3) par une vis de fixation (12) et **en ce que** l'organe élastique de rappel (13) est logé dans le taquet (11) en étant interposé entre ce dernier et l'entretoise (14).

4. Dispositif selon la revendication 3, **caractérisé en ce que** l'organe élastique (13) est un ressort hélicoïdal monté arqué dans le taquet correspondant (11) coaxialement à l'entretoise (14).

5. Dispositif selon l'une des revendications précédentes, **caractérisé en ce que** les deux taquets (11) sont diamétralement opposés.

6. Dispositif selon l'une des revendications précédentes, **caractérisé en ce que** chaque taquet (11) présente une forme générale tronconique oblongue et comporte deux oreilles externes de préhension (19).

7. Dispositif selon l'une des revendications précédentes, **caractérisé en ce qu'**il comprend une rondelle élastique (15) interposée entre l'épaulement radialement interne (8) et la bague extérieure (7) du palier (1) de manière à plaquer axialement le palier (1) contre les deux taquets rotatifs (11).

8. Dispositif selon l'une des revendications précédentes, **caractérisé en ce que** le support de palier (3) comprend une plaque rigide (5) comportant le siège (4) de réception du palier radial (1) solidaire de l'arbre de transmission (2) qui traverse la plaque de support (5) perpendiculairement à celle-ci.

9. Dispositif selon la revendication 8, **caractérisé en ce que** la plaque rigide (5) est solidaire d'une bride (6) de fixation de la plaque (5) à une partie de support.

10. Dispositif selon l'une des revendications précédentes, **caractérisé en ce que** le palier radial (1) est un roulement à billes ou à aiguilles.

11. Dispositif selon l'une des revendications précédentes, **caractérisé en ce que** l'arbre de transmission (2) équipe un véhicule notamment automobile.

12. Dispositif selon la revendication 11,
**caractérisé en ce que** le support de palier (3) est fixé en partie inférieure du moteur du véhicule.

13. Support (3) de palier radial (1) d'un arbre de transmission (2) comportant un siège de palier (4) apte à recevoir le palier (1), **caractérisé en ce qu'**il comprend au moins deux taquets (11) montés à rotation au support de palier (3) et pouvant occuper une position faisant radialement saillie dans l'ouverture d'introduction du palier (1) dans le siège de palier (4).

14. Support de palier selon la revendication 13, **caractérisé en ce que** chaque taquet (11) est monté à rotation relativement au support de palier (3) à l'encontre de la force de rappel d'au moins un organe élastique (13), tel qu'un ressort hélicoïdal, rappelant le taquet (11) à sa position en saillie dans l'ouverture d'introduction du palier (1).

15. Support selon la revendication 14, **caractérisé en ce que** chaque taquet (11) est monté à rotation sur une entretoise (14) fixée au support de palier (3) par une vis de fixation (12) et **en ce que** l'organe élastique de rappel (13) est logé dans le taquet (11) en étant interposé entre ce dernier et l'entretoise (14).

16. Support de palier selon l'une des revendications 13 à 15, **caractérisé en ce que** les deux taquets (11) sont diamétralement opposés.

17. Procédé de montage d'un palier radial (1) d'un arbre de transmission (2) dans un support de palier (3), le procédé utilisant le dispositif tel que défini dans l'une quelconque des revendications 1 à 12, **caractérisé en ce qu'**il consiste à écarter manuellement chaque taquet de sa position radialement en saillie dans l'ouverture d'introduction du palier dans le siège de palier et maintenir manuellement les taquets à leur position écartée, introduire axialement l'arbre de transmission (2) pourvu du palier radial (1) au travers du siège de palier (4), introduire le palier (1) dans son siège (4) jusqu'à amener la bague extérieure (7) du palier (1) en position de butée sur l'épaulement radialement interne, et relâcher les taquets (11) qui sont rappelés élastiquement à leur position en saillie de maintien de la bague extérieure (7) du palier (1) dans son siège (4).

18. Procédé selon la revendication 17, **caractérisé en ce qu'**il est utilisé sur une ligne d'assemblage d'un véhicule notamment automobile pour monter le palier radial (1) d'un arbre de transmission (2) du véhicule dans un support de palier (3) solidaire d'une partie inférieure du moteur du véhicule.

19. Véhicule notamment automobile, **caractérisé en ce qu'**il est équipé d'au moins un dispositif de fixation tel que défini dans l'une quelconque des revendications 1 à 12.
